# EUROPÄISCHE PATENTSCHRIFT

(11) **EP 0 371 196 B1**
(45) Veröffentlichungstag und Bekanntmachung des Hinweises auf die Patenterteilung: **19.05.1993**
(21) Anmeldenummer: 89112820.9
(22) Anmeldetag: 13.07.1989
(51) Int. Cl.: F16F 3/10, F16F 13/00, B60K 5/12

(54) **Elastisches Lager für einen Körper**
Elastic mounting for a body
Support élastique pour un corps

(30) Priorität: 29.11.1988 DE 3840156
(43) Veröffentlichungstag der Anmeldung: 06.06.1990
(73) Patentinhaber: Firma Carl Freudenberg, 69469 Weinheim (DE)
(72) Erfinder: Kurr, Klaus, Dr., D-6940 Weinheim (DE); Eckel, Hans-Gerd, Dr., D-6947 Laudenbach (DE); Seifert, Heinz, D-6947 Laudenbach (DE); Idigkeit, Werner, D-6940 Weinheim (DE); Barth, Armin, D-6946 Gorxheimertal (DE)

(56) Entgegenhaltungen:
- EP-A- 0 044 908
- EP-A- 0 118 887
- DE-A- 2 307 567
- DE-A- 3 608 934
- DE-A- 3 637 294
- FR-A- 1 013 535
- FR-A- 2 179 072
- GB-A- 494 811
- US-A- 2 572 919

## Beschreibung

Die Erfindung betrifft ein elastisches Lager für einen Körper mit dem Gewicht G, insbesondere einen Verbrennungsmotor, umfassend ein Traglager und ein Auflager, die durch eine Gummifeder und durch eine Tragfeder aus nichtkriechendem Werkstoff aufeinander abgestützt sind, wobei die Gummifeder und die Tragfeder in einer Parallelschaltung angeordnet sind und wobei die Tragfeder und die Gummifeder hinsichtlich ihrer Tragfähigkeiten derart aufeinander abgestimmt sind, daß nach dem Aufbringen des zu tragenden Gewichts G die Gummifeder im wesentlichen frei von elastischen Spannungen ist.

Ein solches Lager ist aus der DE-A-23 07 567 bekannt. Das vorbekannte Lager ist zur Lagerung eines Verbrennungsmotors bestimmt. Die Gummifeder und die Tragfeder, die als Schraubenfeder ausgebildet ist, sind in einer funktionstechnischen Parallelschaltung angeodnet, so daß die statische Vorlast durch den Verbrennungsmotor von der Schraubenfeder aufgenommen wird und die Gummifeder in diesem Betriebspunkt spannungsfrei ist. Durch diese Ausgestaltung werden Setzungserscheinungen der Gummifeder auch durch Wärmebelastungen weitgehend vermieden. Dadurch kann die Lage des Verbrennungsmotors in einer vorher bestimmten, festgelegten Höhe gehalten werden. Dabei ist allerdings zu beachten, daß die Isolierung betriebsbedingt eingeleiteter, akustisch wirksamer hochfrequenter Schwingungen wenig befriedigend ist. Eine Abkopplung von in Querrichtung eingeleiteten Schwingungen ist ebenfalls nur unzureichend möglich.

Aus der DE-A-35 34 659 ist ein Lager bekannt, bei dem die Gummifeder und die Tragfeder in einer Reihenschaltung angeordnet und durch das Gewicht G des Verbrennungsmotors in gleicher Weise belastet ist. Nach längerer Gebrauchsdauer ergibt sich dadurch eine zunehmende Setzung des die Gummifeder bildenden, elastomeren Werkstoffes, wodurch deren ursprünglich vorhandene Weichheit mehr und mehr verloren geht, was in bezug auf die Isolierung der akustisch wirksamen, hochfrequenten Schwingungen des Verbrennungsmotors von großem Nachteil ist.

Der Erfindung liegt die Aufgabe zugrunde, ein Lager der eingangs genannten Art derart weiterzuentwickeln, daß einerseits das zu tragende Gewicht G vollständig kompensiert wird und andererseits ein wirksamer Bereich um die Ruhelage des aufgebrachten Gewichts mit sehr weicher Federung geschaffen wird, wodurch eine ausgezeichnete Isolierung von akustisch wirksamen Schwingungen erzielt wird. Auch bei einer sehr lange anhaltenden Gebrauchsdauer und einer Verwendung des Lagers bei hohen Umgebungstemperaturen von bis zu 160 °C soll eine gute Isolierung akustisch wirksamer Schwingungen gewährleistet sein. Eine Abkopplung von in Querrichtung eingeleiteten, hochfrequenten Schwingungen des Verbrennungsmotors soll ebenfalls erfolgen.

Diese Aufgabe wird erfindungsgemäß bei einem elastischen Lager der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Lager umfaßt die Tragfeder zumindest eine Tellerfeder mit S-förmiger Federkennlinie, wobei nach dem Aufbringen des zu tragenden Gewichtes G die Federrate der Tellerfeder im wesentlichen Null ist und wobei zwischen der Tellerfeder und dem Auflager und/oder dem Traglager eine Schubfeder aus gummielastischem Werkstoff vorgesehen ist, die quer zur Richtung der Bewegungsachse eine Nachgiebigkeit hat, die größer ist als diejenige der Tellerfeder. Eine Abkopplung von in Querrichtung eingeleiteten, hochfrequenten Schwingungen des Verbrennungsmotors von dem Untergrund wird hierdurch erzielt.

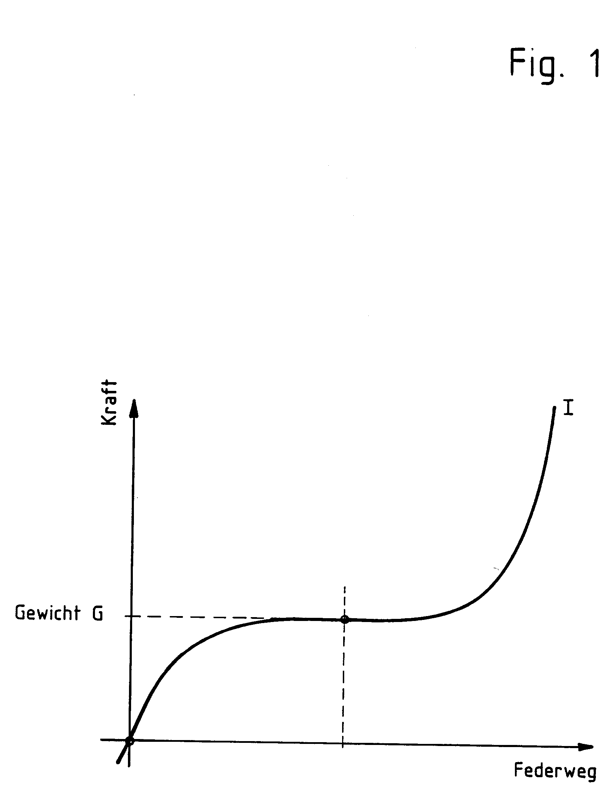

Es ist bekannt, daß Tellerfedern aus nichtkriechendem Werkstoff, beispielsweise aus faserverstärktem Kunststoff oder aus Stahl, eine nahezu S-förmig verlaufende Federkennlinie haben können. An einen anfänglich steilen Anstieg der Federkennlinie schließt sich ein deutlich hervortretender Bereich an, in welchem sich erhebliche Verformungswege auch dann ergeben, wenn die zu tragende Last nur eine sehr geringfügige Veränderung erfährt. Anschließend erfolgt wiederum ein steilerer Anstieg der Federkennlinie (Figur 1), d.h. es sind wiederum größere Kräfte zur Erzielung von Verformungen erforderlich.

Im Rahmen der vorliegenden Erfindung gelangt eine solche Tellerfeder zur Anwendung. Sie wird hinsichtlich ihrer Tragfähigkeit derart mit der bestimmungsgemäßen Belastung abgestimmt, daß die sich ergebende Verformung im schwingungsfreien Zustand den sich im wesentlichen horizontal erstreckenden Bereich der Federkennlinie erreicht. Hierdurch wird zumindest eine annähernd vollständige Kompensierung des Gewichtes des Verbrennungsmotors erreicht und damit eine ausgezeichnete Isolierung der betriebsbedingt von diesem erregten, akustisch wirksamen Schwingungen.

Während der Verwendung eines Verbrennungsmotors in einem Kraftfahrzeug können sich durch das Überfahren von Fahrbahnunebenheiten Relativverlagerungen des Verbrennungsmotors ergeben, die von erheblicher Amplitude sind. Die zur Anwendung gelagende Tellerfeder muß die Erzielung eines entsprechend großen Federungsweges ermöglichen, wenn Anschlaggeräusche vermieden werden sollen. Hinsichtlich des jeweiligen Durchmessers der Tellerfeder können sich dementsprechend erhebliche Werte ergeben.

In den meisten Anwendungsfällen ist es aus konstruktiven Gründen zwingend notwendig, dem Lager kleine Außenmaße zu geben. In diesen Fällen werden im Rahmen der voliegenden Erfindung Ausführungen bevorzugt, bei denen mehrere Tellerfedern paketartig zusammengefaßt sind. In Abhängigkeit von der Anzahl der in dem jeweiligen Federpaket enthaltenen Tellerfedern ergibt sich in diesem Falle ein Federweg von beliebig einstellbarer Größe.

Die Tellerfedern bestehen aus einem nichtsetzenden Werkstoff, beispielsweise aus faserverstärktem Kunststoff oder Stahl. Auch die Verwendung von abweichenden Metallen ist möglich und gewährleistet über lange Zeiträume ein nahezu unverändertes Federungsverhalten.

Parallel zu der Tellerfeder ist bei dem erfindungsgemäßen Lager eine Gummifeder vorgesehen, die derart ausgebildet, eingebaut und mit der Tragfähigkeit der Tellerfeder abgestimmt ist, das nach dem Aufbringen des zu tragenden Gewichtes die Federrate der Tellerfeder im wesentlichen Null und die Gummifeder im wesentlichen frei von elastischen Spannungen ist. Als Folge werden bei Einleitung hochfrequenter Schwingungen keine sich ändernden Kräfte auf den Untergrund übertragen und Setzungserscheinungen in der Gummifeder vermieden.

Die Tellerfeder kann bei dem erfindungsgemäßen Lager aufgrund ihrer Form und Ausbildung aus nichtsetzendem Werkstoff unabhängig von der Gebrauchsdauer und Umgebungstemperatur keine Veränderung ihrer Eigenschaften erfahren. Entsprechende Veränderungen sind bei dem erfindungsgemäßen Lager auch in der Gummifeder nicht zu erwarten. Diese ist bei abgestelltem Motor frei von inneren Spannungen, wodurch Setzungserscheinungen von vorn herein ganz ausgeschlossen sind. Sie können sich jedoch auch bei laufendem Motor insofern nicht ergeben, als die Schwingungen des Motors in abwechselnder Aufeinanderfolge Zug- und Druckbelastungen der Gummifeder zur Folge haben, welche einander kompensieren.

Im Gegensatz zu dem die Tellerfeder des erfindungsgemäßen Lagers bildenden, nichtsetzenden Werkstoff hat der die Gummifeder bildende Werkstoff schwingungsdämpfende Eigenschaften.

Diese sind bei Einleitung von akustisch wirksamen Schwingungen kleiner Amplitude noch nicht wirksam, wodurch eine gute Isolierung derartiger Schwingungen gewährleistet ist. Die Dämpfungseigenschaften treten hingegen bei Einleitung von Schwingungen einer größeren Amplitude zunehmend stärker in Erscheinung, was mit dazu beiträgt, Resonanzüberhöhungen des gelagerten Motors beim An-, Abstellen oder beim Überfahren kritischer Fahrbahnunebenheiten zu verringern. Die diesbezüglichen Eigenschaften werden zusätzlich verbessert durch die erfindungsgemäß vorgegebene Parallelschaltung der Gummifeder mit der Tellerfeder, welche bis zum Erreichen eines progressiv ansteigenden Bereiches der Federkennlinie deformiert wird. Die insgesamt verfügbare Federung verhält sich dadurch bei Einleitung von Schwingungen größerer Amplitude steifer.

Die Gummifeder kann wenigstens zwei Teilfedern umfassen, welche in Richtung der Bewegungsachse einen Abstand von einander haben. Die Oberfläche erfährt hierdurch eine merkliche Vergrößerung, was mit dazu beiträgt, verformungsbedingte Überhitzungen zu vermeiden.

Es ist auch möglich, bei einer solchen Ausführung in dem durch den Abstand gebildeten Raum eine Dämpfungseinrichtung für die Unterdrückung von Schwingungen einer störend großen Amplitude vorzusehen. Hierzu hat es sich als zweckmäßig erwiesen, wenn der Raum nach außen abgeschlossen und mit einer Flüssigkeit gefüllt ist. Die Dämpfungseinrichtung kann dann mit der Flüssigkeit zusammenwirkende, hydraulische Dämpfungsmittel umfassen, wie beispielsweise aus der FR-A-922 441 bekannt.

Im Hinblick auf eine kompakte Bauweise des erfindungsgemäßen Lagers hat es sich als vorteilhaft bewährt, wenn die Tellerfeder und die Gummifeder in Richtung der Bewegungsachse übereinanderliegend angeordnet sind. Baugrößen, die sich nicht nennenswert von den bekannten Motorlagern unterscheiden, lassen sich mit einer solchen Ausführung problemlos realisieren.

Zwischen der Tellerfeder und der Gummifeder kann im ruhenden Zustand ein Abstand vorgesehen sein, wobei das Auflager einen Vorsprung aufweist, der in den durch den Abstand gebildeten Raum hineinragt. Eine gegenseitige Beeinträchtigung der Funktionssicherheit der Tellerfeder und der Gummifeder ist hierdurch ausgeschlossen. Zusätzlich besteht die Möglichkeit, den Vorsprung mit einer Anschlagfläche zur Begrenzung der Auslenkbarkeit der Gummifeder zu versehen. Überlastungsbedingten Beschädigungen wird hierdurch sicher vorgebeugt.

Des weiteren kann zwischen dem Auflager und dem Verbrennungsmotor ein Stützlager vorgesehen sein, wobei das Stützlager durch eine Querfeder aus gummielastischem Werkstoff auf dem Auflager abgestützt ist. Die Abkopplung hochfrequenter Schwingungen des Verbrennungsmotors von dem Auflager und damit zugleich dem Traglager wird hierdurch weiter verbessert.

Das Stützlager und das Auflager können bei einer solchen Ausführung parallel zu der Querfeder durch ein kardanisch ausgebildetes Verbindungsglied aufeinander abgestützt sein, um statische Vorlasten von der Querfeder fernzuhalten. Diese ist dadurch trotz der Verwendung eines gummielastischen Werkstoffes zu ihrer Herstellung in keiner Weise durch Setzungserscheinungen gefährdet. Die ursprünglich vorhandene Federelastizität bleibt vielmehr langfrist erhalten, wenn das Verbindungsglied in Richtung der Bewegungsachse des Lagers im wesentlichen unnachgiebig ausgebildet ist.

Die Querfeder kann zumindest in einem Teilbereich von dem Auflager radial umschlossen sein, wobei in dem Teilbereich zwei einander gegenüberliegende, in der Ruhestellung einen Abstand voneinander aufweisende Anschlagflächen zumindest der Querfeder und des Auflagers vorgesehen sind. Hierdurch soll überlastungsbedingten Beschädigungen der Querfeder vorgebeugt werden.

Die Anschlagflächen können in Längs- und Querichtung des Motors Abstände voneinander haben, die unterschiedlich groß ausgebildet sind. Dem in Längs- und Querrichtung unterschiedlichen Anforderungsspektrums eines in einem Kraftfahrzeug gelagerten Verbrennungsmotors wird hierdurch Rechnung getragen.

Die Querfeder kann zumindest in einem Teilbereich von dem Auflager radial umschlossen sein, wobei in dem Teilbereich ein einstückig angeformter Steg der Querfeder vorgesehen ist, der sich bis zu dem Auflager erstreckt. Bei Gewährleistung einer guten Realtivbeweglichkeit wird hierdurch die insgesamt verfügbare, mechanische Widerstandsfähigkeit weiter verbessert. Zweckmäßig sind wenigstens zwei derartige Stege vorgesehen, welche aufeinander gegenüberliegende Seiten der Bewegungsachsen vorgesehen sind. Der speziellen Anwendungsproblematik in einem Kraftfahrzeug wird hierdurch in günstiger Weise Rechnung getragen.

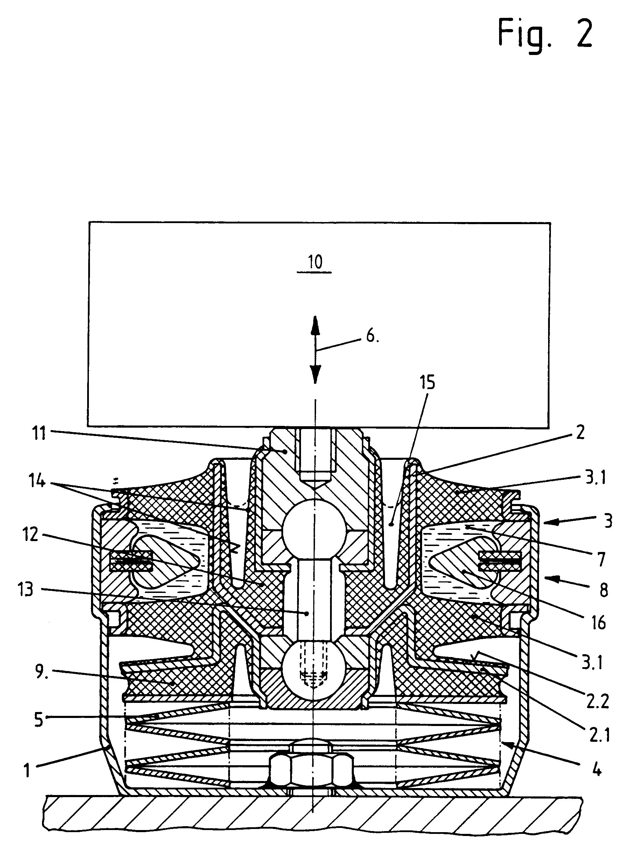

Eine beispielhafte Ausführung des erfindungsgemäßen Lagers ist in Fig. 2 dargestellt. Sie wird nachfolgend näher erläutert:
Das gezeigte Lager ist für die Abstützung eines Verbrennungsmotors mit dem Gewicht G in einem Kraftfahrzeug bestimmt. Es umfaßt ein Traglager 1 und ein Auflager 2, die durch eine Gummifeder 3 und durch eine Tragfeder 4 aus nichtkriechendem Werkstoff aufeinander abgestützt sind. Die Gummifeder 3 und die Tragfeder 4 sind in einer Parallelschaltung angeordnet, wobei die Tragfeder 4 zwei Paare von Tellerfedern 5 umfaßt, welche paketartig gebündelt und übereinander liegend angeordnet sind. Die Tellerfedern 5 haben eine S-förmig verlkaufende Federkennlinie und sind hinsichtlich ihrer Tragfähigkeit derart mit der Tragfähigkeit der Gummifeder 3 abgestimmt, daß nach dem Aufbringen des Gewichtes G des zu tragenden Motors die Federrate der Tellerfedern 5 im wesentlichen Null und die Gummifeder 3 im wesentlichen frei von elastischen Spannungen ist. Die Tellerfedern 5 bestehen bei dem gezeigten Ausführungsbeispiel aus Stahl. Sie sind im Bereich ihres Innen- und Außenumfanges in Kunstoffringen geführt und aufeinander abgestützt.

Die Tellerfedern 5 und die Gummifeder 3 sind von rotationssymmetrischer Gestalt und der Bewegungsachse 6 konzentrisch zugeordnet. Sie liegen übereinander, wodurch das gezeigte Lager von äußerst kompakter Bauweise ist.

Die Gummifeder 3 umfaßt zwei Teilfedern 3.1, welche in Richtung der Bewegungsachse einen Abstand voneinander haben und gemeinsam mit dem Traglager 1 und dem Auflager 2 einen flüssigkeitsgefüllten Raum umschließen. In diesen ragen hydraulische Dämpfungsmittel 16 hinein, welche an dem Traglager 1 festgelegt sind und im wesentlichen aus einem kreisringförmigen Körper bestehen, welcher mit seiner Innenseite dem in diesem Bereich zylindrisch ausgebildeten Auflager 2 bis auf einen geringen Abstand angenähert ist. Durch den hierdurch gebildeten Spalt vermögen die beiderseits angrenzenden, in dem Raum 7 eingeschlossenen Flüssigkeitsbestandteile bei Einleitung hochfrequenter Schwingungen von kleiner Amplitude nahezu ungedämpft hin- und herzuströmen, wodurch derartige Schwingungen in einer guten Weise isoliert werden. Ergeben sich demgegenüber Schwingungsausschläge des gelagerten Motors 10 von einer erheblichen Amplitude, welche im Bereich von einem oder mehreren mm liegen kann, dann resultiert ein Rückstau von Flüssigkeitsbestandteilen in dem Spalt, was mit einer großen Dämpfungswirkung verbunden ist. Entsprechende Schwingungsausschläge erfahren daher im Gegensatz zu den vorstehend beschriebenen Schwingungsausschlägen kleiner Amplitude im Bereich von max. o,1 mm eine große Dämpfung.

Zwischen dem Paket aus Tellerfedern 5 und dem Auflager 2 ist eine Schubfeder 9 aus gummielastischem Werkstoff vorgesehen, wobei die Schubfeder 9 quer zur Richtung zur Bewegungsachse 6 eine Nachgiebigkeit hat, die größer ist als diejenige der Tellerfedern 5. In Querrichtung eingeleitete, akustisch wirksame Schwingungen des gelagerten Motors 10 werden hierdurch in guter Weise isoliert und von dem Traglager 1 ferngehalten.

Zwischen der Tellerfeder 5 und der Gummifeder 3 ist in dem dargestellten, ruhenden Zustand ein Abstand vorgesehen, in den der Vorsprung 2.1 des Auflagers hineinragt. Dieser ist mit einer Anschlagfläche 2.2 versehen, welche zur Begrenzung der Auslenkbarkeit der Gummifeder 3.1 vorgesehen ist. Hierdurch soll einer überlastungsbedingten Zerstörung der Gummifeder vorgebeugt werden.

Desweiteren ist zwischen dem Auflager 2 und dem Verbrennungsmotor 10 ein Stützlager 11 vorgesehen, wobei das Stützlager 11 durch eine Querfeder 12 aus gummielastischem Werkstoff auf dem Auflager abgestützt ist. Die Abkopplung der in Querrichtung eingeleiteten, hochfrequenten Schwingungen von dem Traglager 1 wird hierdurch weiter verbessert.

Das Stützlager 11 und das Auflager 2 sind dabei parallel zu der Querfeder 12 durch ein kardanisch ausgebildetes Verbindungsglied aufeinander abgestützt, welches in Richtung der Bewegungsachse im wesentlichen unnachgiebig ausgebildet ist. Die Querfeder 12 ist dadurch nicht durch das Gewicht G des zu tragenden Motors belastet. Setzungserscheinungen und Veränderungen der elastischen Nachgiebigkeit sind folglich nicht zu befürchten.

Um zu verhindern, daß sich bei Einleitung von Querbewegungen zu großer Amplitude eine Zerstörung der Querfeder ergeben kann, ist es bei dem gezeigten Ausführungsbeispiel vorgesehen, daß die Querfeder und das Stützlager von dem Auflager 2 in einem Abstand radial umschlossen sind, wobei der ineinander gegenüberliegenden Flächen durch Anschlagflächen gebildet sind. Zusätzlich ist der Abstand auf den einander gegenüberliegenden Seiten durch die Stege 15 überbrückt, um eine gute Führung des Stützlagers 11 in dem Auflager zu gewährleisten.

Das dargestellte Lager kann bei der Lagerung von Verbrennungsmotoren in Kraftfahrzeugen wegen seiner kompakten Bauform problemlos zur Anwendung gelangen. Es zeichnet sich sowohl hinsichtlich der Dämpfung tieffrequenter Schwingungen als auch hinsichtlich der Isolierung von akustisch wirksamen, hochfrequenten Schwingungen über lange Zeiträume durch ein völlig unveränderliches Verhalten aus, wobei erhöhte Umgebungstemperaturen bis zu 160°C problemlos in Kauf genommen werden können.

## Patentansprüche

1. Elastisches Lager für einen Körper mit dem Gewicht G, insbesondere einen Verbrennungsmotor, umfassend ein Traglager (1) und ein Auflager (2), die durch eine Gummifeder (3) und durch eine Tragfeder (4) aus nichtkriechendem Werkstoff aufeinander abgestützt sind, wobei die Gummifeder (3) und die Tragfeder (4) in einer Parallelschaltung angeordnet sind und wobei die Tragfeder (4) und die Gummifeder (3) hinsichtlich ihrer Tragfähigkeiten derart aufeinander abgestimmt sind, daß nach dem Aufbringen des zu tragenden Gewichts G die Gummifeder (3) im wesentlichen frei von elastischen Spannungen ist, dadurch gekennzeichnet, daß die Tragfeder (4) zumindest eine Tellerfeder (5) mit S-förmiger Federkennlinie umfaßt, daß nach dem Aufbringen des zu tragenden Gewichts G die Federrate der Tellerfeder (5) im wesentlichen Null ist, daß zwischen der Tellerfeder (5) und dem Auflager (2) und/oder dem Traglager (1) eine Schubfeder (9) aus gummielastischem Werkstoff vorgesehen ist und daß die Schubfeder (9) quer zur Richtung der Bewegungsachse (6) der Tellerfeder (5) eine Nachgiebigkeit hat, die größer ist als diejenige der Tellerfeder (5).

2. Lager nach Anspruch 1, dadurch gekennzeichnet, daß die Tellerfeder (5) aus faserverstärktem Kunststoff oder Stahl besteht.

3. Lager nach Anspruch 1, dadurch gekennzeichnet, daß die Tellerfeder (5) und die Gummifeder (3) im wesentlichen ringförmig ausgebildet sind und eine gemeinsame oder eine ineinander übergehende Bewegungsachse (6) haben.

4. Lager nach Anspruch 3, dadurch gekennzeichnet, daß die Gummifeder (3) wenigstens zwei Teilfedern (3.1) umfaßt und daß die Teilfedern (3.1) in Richtung der Bewegungsachse (6) einen Abstand voneinander haben.

5. Lager nach Anspruch 1 und 4, dadurch gekennzeichnet, daß in dem durch den Abstand gebildeten Raum (7) eine Dämpfungseinrichtung (8) vorgesehen ist.

6. Lager nach Anspruch 5, dadurch gekennzeichnet, daß der Raum (7) nach außen abgeschlossen mit einer Flüssigkeit gefüllt ist.

7. Lager nach Anspruch 5 und 6, dadurch gekennzeichnet, daß die Dämpfungseinrichtung (8) mit der Flüssigkeit zusammenwirkende, hydraulische Dämpfungsmittel umfaßt.

8. Lager nach Anspruch 1 bis 7, dadurch gekennzeichnet, daß die Tellerfeder (5) und die Gummifeder (3) in Richtung der Bewegungsachse (6) übereinanderliegend angeordnet sind.

9. Lager nach Anspruch 8, dadurch gekennzeichnet, daß zwischen der Tellerfeder (5) und der Gummifeder (3) im ruhenden Zustand ein Abstand vorgesehen ist und daß das Auflager (2) einen Vorsprung (2.1) aufweist, der in den durch den Abstand gebildeten Raum hineinragt.

10. Lager nach Anspruch 9, dadurch gekennzeichnet, daß der Vorsprung (2.1) mit einer Anschlagfläche (2.2) zur Begrenzung der Auslenkbarkeit der Gummifeder (3.1) versehen ist.

11. Lager nach Anspruch 1 bis 10, dadurch gekennzeichnet, daß zwischen dem Auflager (2) und dem Verbrennungsmotor (10) ein Stützlager (11) vorgesehen ist und daß das Stützlager (11) durch eine Querfeder (12) aus gummielastischem Werkstoff auf dem Auflager (2) gestützt ist.

12. Lager nach Anspruch 11, dadurch gekennzeichnet, daß das Stützlager (11) und das Auflager (2) parallel zu der Querfeder (12) durch ein kardanisch ausgebildetes Verbindungsglied (13) aufeinander abgestützt sind.

13. Lager nach Anspruch 12, dadurch gekennzeichnet, daß das Verbindungsglied (13) in Richtung der Bewegungsachse (6) im wesentlichen unnachgiebig ausgebildet ist.

14. Lager nach Anspruch 11 bis 13, dadurch gekennzeichnet, daß die Querfeder (12) zumindest in einem Teilbereich von dem Auflager (2) radial umschlossen ist und daß in dem Teilbereich zwei einander gegenüberliegende, in der Ruhestellung einen Abstand auf voneinander aufweisende Anschlagflächen (14) der Querfeder (12) und des Auflagers (2) vorgesehen sind.

15. Lager nach Anspruch 14, dadurch gekennzeichnet, daß die Anschlagflächen (14) in Längs- und Querrichtung des Motors (10) Abstände voneinander haben, die unterschiedlich groß ausgebildet sind.

16. Lager nach Anspruch 11 bis 15, dadurch gekennzeichnet, daß die Querfeder (12) zumindest in einem Teilbereich von dem Auflager radial (2) umschlossen ist und daß in dem Teilbereich ein einstückig angeformter Steg (15) der Querfeder (12) vorgesehen ist, der sich in der Ruhestellung bis zu dem Auflager (2) erstreckt.

17. Lager nach Anspruch 16, dadurch gekennzeichnet, daß wenigstens zwei Stege (15) vorgesehen sind und daß die Stege (15) aufeinander gegenüberliegenden Seiten der Bewegungsachse (6) vorgesehen sind.

## Claims

1. An elastic mount for a body of weight G, in particular a combustion engine, comprising a bearing mount (1) and a support (2) which are supported one on the other by a rubber spring (3) and by a bearing spring (4) made of creep-resistant material, the rubber spring (3) and the bearing spring (4) being arranged in a parallel coupling, and the bearing spring (4) and the rubber spring (3) being matched to one another in respect of their load-bearing capacities in such a way that, after imposition of the weight G to be carried, the rubber spring (3) is substantially free of elastic stresses, characterised in that the bearing spring (4) comprises at least one disc spring (5) with a sinusoidal spring characteristic, in that the spring rate of the disc spring (5) is substantially zero after imposition of the weight G to be carried, in that a thrust spring (9) made of rubber-elastic material is provided between the disc spring (5) and the support (2) and/or the bearing mount (1), and in that the thrust spring (9) has a resilience which is greater than that of the disc spring (5) transversely to the direction of the axis of movement (6) of the disc spring (5).

2. A mount according to claim 1, characterised in that the disc spring (5) is composed of fibre-reinforced plastic or steel.

3. A mount according to claim 1, characterised in that the disc spring (5) and the rubber spring (3) are of substantially annular construction and have a common or merging axis of movement (6).

4. A mount according to claim 3, characterised in that the rubber spring (3) comprises at least two partial springs (3.1), and in that the partial springs (3.1) are spaced apart in the direction of the axis of movement (6).

5. A mount according to claims 1 and 4, characterised in that a damping device (8) is provided in the chamber (7) formed by the spacing.

6. A mount according to claim 5, characterised in that the chamber (7), which is closed off from the outside, is filled with a fluid.

7. A mount according to claims 5 and 6, characterised in that the damping device (8) comprises hydraulic damping means which interact with the fluid.

8. A mount according to any of claims 1 to 7, characterised in that the disc spring (5) and the rubber spring (3) are arranged lying one above the other in the direction of the axis of movement (6).

9. A mount according to claim 8, characterised in that a spacing is provided between the disc spring (5) and the rubber spring (3) in the state of rest, and in that the support (2) has a projection (2.1) which protrudes into the chamber formed by the spacing.

10. A mount according to claim 9, characterised in that the projection (2.1) is provided with a stop surface (2.2) for limiting the deflectability of the rubber spring (3.1).

11. A mount according to any of claims 1 to 10, characterised in that a supporting mount (11) is provided between the support (2) and the combustion engine (10), and in that the supporting mount (11) is supported on the support (2) by a transverse spring (12) made of rubber-elastic material.

12. A mount according to claim 11, characterised in that the supporting mount (11) and the support (2) are supported on one another parallel to the transverse spring (12) by a connecting member (13) which is constructed as a universal joint.

13. A mount according to claim 12, characterised in that the connecting member (13) is constructed so as to be substantially non-resilient in the direction of the axis of movement (6).

14. A mount according to any of claims 11 to 13, characterised in that the transverse spring (12) is surrounded radially by the support (2) at least in a partial region, and in that two stop surfaces (14) of the transverse spring (12) and of the support (2) are provided in the partial region, said stop surfaces lying opposite one another and being spaced apart in the position of rest.

15. A mount according to claim 14, characterised in that the stop surfaces (14) have spacings from one another in the longitudinal and transverse directions of the engine (10), which spacings are of different sizes.

16. A mount according to any of claims 11 to 15, characterised in that the transverse spring (12) is surrounded radially by the support (2) at least in a partial region, and in that an integrally moulded-on web (15) of the transverse spring (12) is provided in the partial region, which web extends up to the support (2) in the position of rest.

17. A mount according to claim 16, characterised in that at least two webs (15) are provided, and in that the webs (15) are provided on opposite sides of the axis of movement (6).

## Revendications

1. Support élastique pour un corps de poids G, notamment un moteur à combustion interne, comportant un organe de support (1) et un organe d'appui (2), qui sont appuyés l'un sur l'autre par un ressort en caoutchouc (3) et par un ressort de support (4) formé d'un matériau non plastique, le ressort en caoutchouc (3) et le ressort de support (4) étant disposés de façon à agir pareillement et le ressort de support (4) et le ressort en caoutchouc (3) ayant des capacités de portance qui sont mutuellement adaptées de telle sorte que, après l'application du poids G à supporter, le ressort en caoutchouc (3) soit dans l'essentiel exempt de contraintes élastiques, caractérisé en ce que le ressort de support (4) comporte au moins un ressort annulaire (5) ayant une courbe caractéristique d'élasticité en forme de S, en ce que, après l'application du poids G à supporter, le taux d'élasticité du ressort annulaire (5) est sensiblement nul, en ce qu'il est prévu entre le ressort annulaire (5) et l'organe d'appui (2) et/ou l'organe de support (1), un ressort de poussée (9) formé d'un matériau ayant l'élasticité du caoutchouc et en ce que le ressort de poussée (9) comporte, perpendiculairement à la direction de l'axe de mouvement (6) du ressort annulaire (5), une flexibilité qui est plus grande que celle du ressort annulaire (5).

2. Support selon la revendication 1, caractérisé en ce que le ressort annulaire (5) se compose d'une matière plastique renforcée par fibres ou d'acier.

3. Support selon la revendication 1, caractérisé en ce que le ressort annulaire (5) et le ressort en caoutchouc (3) sont agencés dans l'essentiel avec une forme annulaire et comportent un axe de mouvement (6) commun ou des axes mutuellement alignés.

4. Support selon la revendication 3, caractérisé en ce que le ressort en caoutchouc (3) comporte au moins deux ressorts élémentaires (3.1) et en ce que les ressorts élémentaires (3.1) sont espacés d'une certaine distance l'un de l'autre dans la direction de l'axe de mouvement (6).

5. Support selon une des revendications 1 et 4, caractérisé en ce qu'il est prévu un dispositif d'amortissement (8) dans le volume (7) créé par l'espacement.

6. Support selon la revendication 5, caractérisé en ce que le volume (7), obturé vers l'extérieur, est rempli d'un liquide.

7. Support selon une des revendications 5 et 6, caractérisé en ce que le dispositif d'amortissement (8) comporte des moyens hydrauliques d'amortissement coopérant avec le liquide.

8. Support selon une des revendications 1 à 7, caractérisé en ce que le ressort annulaire (5) et le ressort en caoutchouc (3) sont disposés l'un au-dessus de l'autre dans la direction de l'axe de mouvement (6).

9. Support selon la revendication 8, caractérisé en ce qu'il est prévu un certain espacement entre le ressort annulaire (5) et le ressort en caoutchouc (3) dans la condition de repos et en ce que l'organe d'appui (2) comporte une saillie (2.1) qui pénètre dans le volume créé par ledit espacement.

10. Support selon la revendication 9, caractérisé en ce que la saillie (2.1) est pourvue d'une surface de butée (2.2) pour limiter la course élastique du ressort en caoutchouc (3.1).

11. Support selon une des revendications 1 à 10, caractérisé en ce qu'il est prévu entre l'organe d'appui (2) et le moteur à combustion interne (10) un organe de soutien (11) et en ce que cet organe de soutien (11) est appuyé contre l'organe d'appui (2) par un ressort transversal (12) formé d'un matériau ayant l'élasticité du caoutchouc.

12. Support selon la revendication 11, caractérisé en ce que l'organe de soutien (11) et l'organe d'appui (2) sont appuyés l'un sur l'autre, parallèlement au ressort transversal (12), au moyen d'un organe de liaison (13) agencé à la façon d'un cardan.

13. Support selon la revendication 12, caractérisé en ce que l'organe de liaison (13) est agencé de façon à être sensiblement inflexible dans la direction de l'axe de mouvement (6).

14. Support selon une des revendications 11 à 13, caractérisé en ce que le ressort transversal (12) est entouré radialement, au moins dans une zone partielle, par l'organe d'appui (2) et en ce qu'il est prévu dans cette zone partielle deux surfaces de butée (14) du ressort transversal (12) et de l'organe d'appui (2), lesdites surfaces étant situées l'une en regard de l'autre et étant espacées d'une certaine distance dans la position de repos.

15. Support selon la revendication 14, caractérisé en ce que les surfaces de butée (14) sont espacées l'une de l'autre, dans la direction longitudinale et dans la direction transversale du moteur (10), de distances qui ont des grandeurs différentes.

16. Support selon une des revendications 11 à 15, caractérisé en ce que le ressort transversal (12) est entouré radialement, au moins dans une zone partielle, par l'organe d'appui (2) et en ce qu'il est prévu dans cette zone partielle une branche (15) formée unitairement, du ressort transversal (12) qui s'étend, dans la position de repos, jusqu'à l'organe d'appui (2).

17. Support selon la revendication 16, caractérisé en ce qu'il est prévu au moins deux branches (15) et en ce que ces branches (15) sont prévues sur des côtés mutuellement opposés de l'axe de mouvement (6).
